# EUROPÄISCHE PATENTANMELDUNG

(11) **EP 0 773 405 A2**
(43) Veröffentlichungstag der Anmeldung: **14.05.1997**
(21) Anmeldenummer: 96116543.8
(22) Anmeldetag: 16.10.1996
(51) Int. Cl.: F23D 14/14, F23D 14/46

(54) **Gasbrenner mit festkörpergestützter, flammloser Verbrennung**

(30) Priorität: 09.11.1995 DE 19541802
(71) Anmelder: ROBERT BOSCH GMBH, 70442 Stuttgart (DE)
(72) Erfinder: Daniel, Walter, 71065 Sindelfingen (DE); Lehr, Walter, 70469 Stuttgart (DE); Kling, Anton, 70839 Gerlingen (DE); Sarholz, Walter, 70469 Stuttgart (DE)

(57) **Zusammenfassung**

Die Erfindung geht aus von einem Gasbrenner mit festkörpergestützter, flammloser Verbrennung, mit Mitteln zum Stabilisieren der Verbrennungsreaktion durch Erweitern des Reaktionsbereichs von der Hauptreaktionszone stromaufwärts gegen den Eingangsbereich des Festkörpers.

Es wird vorgeschlagen, daß der Festkörper (10, 30) Strukturen (18, 32) hoher Wärmeleitfähigkeit enthält, die an der Abgasseite (16) bzw. in der Hauptreaktionszone (14, 34) beginnend sich mindestens über einen Teil der in Gasströmungsrichtung gemessenen Länge des Festkörpers (10, 30) erstrecken.

Dadurch ist erreicht, daß der Leistungsregelbereich des Gasbrenners erheblich vergrößert werden kann ohne daß eine katalytische Beschichtung des Festkörpers vorgesehen werden muß.

## Beschreibung

### Stand der Technik

Die Erfindung geht aus von einem Gasbrenner nach der Gattung des Hauptanspruchs. Gasbrenner wurden bis jetzt überwiegend in einem kleinen Leistungsbereich mit einem Verhältnis von ca. 2:1 zwischen Vollast und niedrigster Teillast betrieben, obwohl es wünschenswert wäre, im Interesse eines kontinuierlicheren Brennerbetriebs den Leistungsregelbereich deutlich zu vergrößern. Der kleine Leistungsregelbereich ist bedingt durch die enge Nachbarschaft zwischen oberer Leistungsdichte, die durch die laminare Flammengeschwindigkeit festgelegt ist und der unteren Leistungsdichte, die durch die Neigung zum Flammenrückschlag bei zu kleinen Geschwindigkeiten oder durch die Gefahr der Reaktionslöschung bei guter Wärmeabfuhr und kleiner Wärmeproduktion bedingt ist. Es gibt Ansätze zur Überwindung der oberen Grenze durch teilweises Aufbrechen der Strömung in eine turbulente Strömung. Die vorliegende Erfindung basiert auf einem anderen Verbrennungskonzept, nämlich dem der festkörpergestützten Verbrennung. Gasdurchströmte Festkörper, in denen aufgrund des mittleren Abstands der Gasmoleküle an den Festkörperwänden keine offene Flamme brennt, können bei ausreichend hoher Temperatur eine vollständige Verbrennung von Brenngas und Luft unterstützen. Dieses Konzept liegt auch der bekannten katalytischen Verbrennung zugrunde und ist dort tragfähig, weil der Umsatz der katalytischen Verbrennung häufig nicht bei einer Temperatur plötzlich auf ein Maximum ansteigt, sondern in einem relativ breiten Temperaturintervall von kleinen auf große Werte anwächst, so daß der von der Hauptreaktionszone stromaufwärts gerichtete Wärmestrom im Katalysator eine vorgelagerte Zone schwächerer Reaktion erzeugt und damit die Wärmefreisetzung stabilisiert gegen Auskühlung und Durchgehen der Reaktion.

Ein anderes bekanntes Konzept sieht eine festkörpergestützte Verbrennung mit offener Flamme vor (DE 43 22 109 A1), bei welchem ein aus porösem Material bestehender Festkörper so ausgebildet ist, daß die Porengröße in Strömungsrichtung des Gas-Luft-Gemisches zunimmt und an einer Stelle einen kritischen Wert (Péclet-Zahl) erreicht, bei welchem sich die Flamme ausbildet. Dadurch ist erreicht, daß die Flamme bei niedriger Temperatur und Schadstoffemission stabil brennt. Zur weiteren Verringerung der Emissionen wird auch bei diesem Stand der Technik vorgeschlagen, den porösen Festkörper mit einem Katalysatormaterial zu beschichten.

### Vorteile der Erfindung

Die erfindungsgemäße Anordnung mit den kennzeichnenden Merkmalen des Hauptanspruchs hat den Vorteil, daß der Leistungsregelbereich des mit flammloser Verbrennung arbeitenden Gasbrenners erheblich vergrößert werden kann, ohne daß eine katalytische Beschichtung des Festkörpers vorgesehen werden muß. Die im Festkörper enthaltenen Strukturen hoher Wärmeleitfähigkeit dehnen die Reaktionszone im Festkörper aus und verstetigen sie so, daß auch im vergrößerten Leistungsbereich eine stabile Verbrennung gewährleistet ist. Eine erfindungsgemäße stabilisierte festkörpergestützte Verbrennung erlaubt eine Leistungsregelung mindestens in einem Bereich von 14 W/cm² bis 150 W/cm², und damit bei einem Maximalwert, der über den Doppelten des mit laminarer Flammengeschwindigkeit erreichbaren Wertes von ca. 65 W/cm² liegt. Der hohe Leistungsregelungsfaktor von 10:1 und das Fehlen einer katalytischen Beschichtung eröffnet Möglichkeiten für einen unterbrechungsarmen Betrieb von Gasheizthermen.

Durch die in den Unteransprüchen aufgeführten Merkmale sind vorteilhafte Weiterbildungen und Ausgestaltungen des Gegenstandes des Hauptanspruchs möglich.

Der Festkörper kann vorteilhaft ein Keramikkörper sein, beispielsweise mit einer Wabenstruktur, der die Auskoppelung von Wärme durch Strahlung begünstigt. Als Festkörper kann auch ein katalytisch inaktiver Keramikkörper vorgesehen sein, wie er als Stützgerüstmonolyth zur späteren Beschichtung mit Coating und Katalysator z. B. aus der Automobiltechnik bekannt ist.

Bei Verwendung von keramischen Festkörpern wird weiter vorgeschlagen, daß die Strukturen hoher Wärmeleitfähigkeit durch in den Keramikkörper hineinragende bzw. in diesen eingebettete, vorzugsweise aus zunderfestem, rostfreiem Edelstahl bestehende Stifte und dergleichen gebildet sind. Beispielsweise wurden in die Kanäle eines Cordieritmonolythen (Länge 45 mm, Durchmesser 20 mm, 200 cpi) ohne Coating und Katalysatorschicht 10 mm lange, 0,7 mm breite und 0,15 mm dicke Bänder aus Edelstahl, z. B. 1.4767, eingeführt. Mit dieser Verbesserung der Wärmeleitfähigkeit in einem Teilabschnitt der Keramik gelang es, eine festkörpergestützte Methanverbrennung mit Flächenleistungsdichten von 14 W/cm² bis 150 W/cm² bei λ= 1,5 mit stabiler Verbrennung zu realisieren. Die gemessenen NO_{X}-Emissionen lagen unter 5 ppm, die CO-Emissionen lassen sich ebenso wie die Methanemissionen bei geeignetem Temperaturprofil der Ausbrandstrecke unter 5 ppm halten (T ≈ 1100 bis 1200° C auf 30 bis 40 mm hinter der Reaktionszone). Bei hohen Leistungsdichten ist eine solche Ausbrandstrecke nicht erforderlich.

Die Herstellung des Festkörpers kann vereinfacht werden, wenn die Stifte und dergleichen gemeinsam an einem abgasseitig am Festkörper befestigten Träger sitzen.

Eine andere technische Lösung zur Verwirklichung des Erfindung zugrunde liegenden Konzepts besteht darin, daß der Festkörper insgesamt aus einem katalytisch unbeschichteten Material hoher Wärmeleitfähigkeit besteht. Als Material für den Festkörper kann beispielsweise SiSiC verwendet werden oder der Festkörper kann aus metallischen Strukturen gebildet sein, wie sie bei metallischen Katalysatorträgern z. B. mit einem spiralig gerolltem Paar aus glattem und gewelltem Blech verwendet werden. Auch kann der Festkörper beispielsweise eine aus dünnen, parallel angeordneten Wärmetauscherblechen aus Edelstahl gebildete Struktur haben.

Zur weiteren Verbesserung der Systemeigenschaften kann der Festkörper aus metallischen Strukturen bestehen, die mindestens teilweise mit einer Keramikschicht überzogen sind, welche die Bildung und Erhaltung eines Systemkerns mit relativ gleichmäßig hoher Temperatur fördert. Solche Schichten können auch die Auskopplung von Wärme über Strahlungsprozesse beeinflussen. Da die Strahlungsleistung in einer für einen großen Leistungsregelungsbereich besonders günstigen Weise von der Temperatur abhängt, kommt den Absorptions- und Emissionseigenschaften der Beschichtungen eine besondere Bedeutung zu. Geeignete Materialien sind Oxide der Seltenen Erdmetalle, z. B. Y₂O₃, La₂O₃, TiO₂, ZrO₂. Dotierungen mit Übergangsmetalloxiden wie MnO₂, Fe₂O₃, CoO, MoO₃, WO₃, vorzugsweise unter 5%, verstärken die Absorption im Sichtbaren. Eine Beschichtung mit den genannten Oxiden, Mischoxiden oder Mischoxiden mit Al₂O₃ wirkt sich vorteilhaft auf die Temperaturabhängigkeit der Strahlungsleistung aus.

Zur Verhinderung einer Rückzündung, insbesondere bei Festkörpern, die insgesamt aus einer metallischen Struktur mit hoher Wärmeleitfähigkeit bestehen, wird vorgeschlagen, daß an der Eingangsseite des Festkörpers eine Keramiklochplatte angeordnet ist.

Eine flexible Ausnutzung des Stabilitätsbereiches der festkörpergestützten Verbrennung ist möglich, wenn die Verbrennung durch eine λ-Regelung unterstützt ist. Wegen der hohen Abgastemperatur von über 1000° C verbleibt der größere Teil der Energie im Abgas. Eine Annäherung an die adiabate Flammentemperatur verstärkt die Temperaturabhängigkeit der Leistungsdichte erheblich über das vom Auskoppelungsmechanismus, z. B. der Strahlung vorgegebene Gesetz hinaus. Da die adiabate Flammentemperatur stark vom Luftverhältnis λ abhängt, kann eine sorgfältige λ-Regelung den Leistungsregelungsbereich weiter ausdehnen. Eine λ-Regelung empfiehlt sich auch zur Einhaltung der Stabilitätsgrenze. In den o.g. Versuchen wurde beobachtet, daß bereits kleine λ-Änderungen die Löschung der Reaktion einleiten können. Da die Einleitung der Reaktionslöschung mit unterschiedlicher Geschwindigkeit und in vielen Fällen so langsam erfolgt, daß man noch nach Minuten mit Erfolg eingreifen kann, bietet eine λ-Regelung auch zur Beherrschung der Brennerdynamik große Vorteile, insbesondere in Kombination mit einer Temperaturmessung. Einen weiteren Anwendungsbereich für eine λ-Regelung findet man beim Zurückfahren des Systems mit einer λ-Erhöhung. Dabei kann man kurzzeitiges Verlassen des Stabilitätsbereichs in Kauf nehmen.

Der Leistungsregelbereich kann ebenfalls vergrößert bzw. noch erweitert werden, wenn eine Wärmeauskoppelung auch in einem vorzugsweise an der Gaseintrittsseite des Festkörpers angeordneten, wasserdurchströmten Wärmetauscher erfolgt.

### Zeichnung

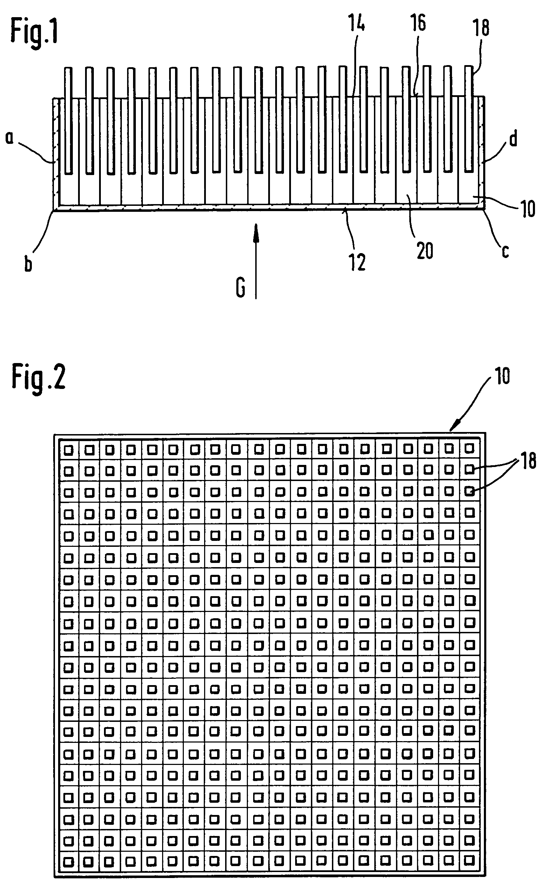

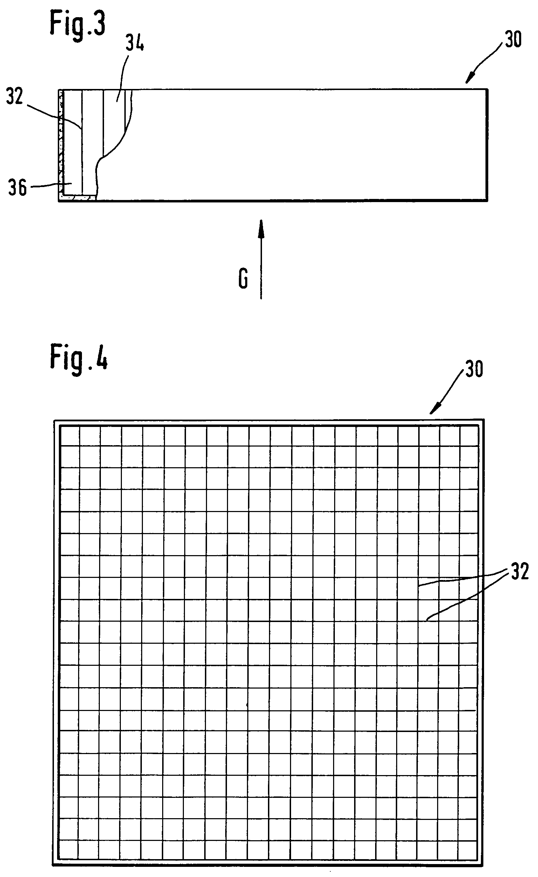

Zwei Ausführungsbeispiele der Erfindung sind in der Zeichnung schematisch dargestellt und in der nachfolgenden Beschreibung näher erläutert. Es zeigen Figur 1 eine Seitenansicht des Festkörpers eines Gasbrenners nach dem ersten Ausführungsbeispiel, Figur 2 eine Draufsicht auf den Festkörper nach Figur 1, Figur 3 eine Seitenansicht des Festkörpers eines Gasbrenners nach dem zweiten Ausführungsbeispiel und Figur 4 eine Draufsicht auf den Festkörper nach Figur 3.

### Beschreibung der Ausführungsbeispiele

Der Gasbrenner nach den Figuren 1 und 2 hat eine in ein nicht dargestelltes Brennergehäuse einsetzbare Festkörperplatte 10 aus einem Keramikmaterial mit Wabenstruktur, die im Betrieb an ihre Unterseite 12 von einem Gas-Luft-Gemisch G angeströmt ist. Das Gemisch verbrennt flammlos in der Hauptreaktionszone 14 der Festkörperplatte 10 die vor deren Abgasseite 16 liegt. In die etwa quadratische Festkörperplatte 10 sind eine Vielzahl von metallischen Stiften 18 eingesetzt, die aus einem Edelstahl mit hoher Wärmeleitfähigkeit bestehen. Die Stifte 18 stehen abgasseitig über die Festkörperplatte 10 vor und reichen in diese bis in den der Unterseite 12 benachbarten Eingangsbereich 20 hinein.

Die Stifte 12 leiten Wärme aus der Hauptreaktionszone 14 in den Eingangsbereich 20, wodurch, wie erfindungsgemäß angestrebt, die Flammenstabilisierung in das Volumen der Festkörperplatte 10 hinein erweitert und verstetigt wird. Die Außenbereiche a, b, c, d der Festkörperplatte 10 stehen für eine Wärmeauskoppelung durch Strahlung zur Verfügung, wodurch die Festkörperplatte 10 gekühlt und infolge davon die Schadstoffemissionen des Gasbrenners weiter verringert werden.

Der Gasbrenner nach den Figuren 3 und 4 hat eine Festkörperplatte 30 aus einer gasdurchlässigen Struktur 32 aus gut wärmeleitendem Werkstoff, z. B. aus SiSiC. Bei dieser Ausführung wird die Temperatur aus der Hauptreaktionszone 34 unmittelbar durch die Struktur 32 selbst in den Eingangsbereich 36 der Festkörperplatte 30 übertragen, so daß sich besondere Einsätze hierfür erübrigen.

## Patentansprüche

1. Gasbrenner mit festkörpergestützter, flammloser Verbrennung, mit Mitteln zum Stabilisieren der Verbrennungsreaktion durch Erweitern des Reaktionsbereichs von der Hauptreaktionszone stromaufwärts gegen den Eingangsbereich des Festkörpers, dadurch gekennzeichnet, daß der Festkörper (10, 30) Strukturen (18, 32) hoher Wärmeleitfähigkeit enthält, die an der Abgasseite (16) bzw. in der Hauptreaktionszone (14, 34) beginnend sich mindestens über einen Teil der in Gasströmungsrichtung gemessenen Länge des Festkörpers (10, 30) erstrecken.

2. Gasbrenner nach Anspruch 1, dadurch gekennzeichnet, daß der Festkörper (10) ein Keramikkörper ist, der vorzugsweise eine Wabenstruktur hat.

3. Gasbrenner nach Anspruch 2, dadurch gekennzeichnet, daß der Festkörper (10) ein katalytisch inaktiver Keramikkörper ist, wie er als Stützgerüstmonolyth zur späteren Beschichtung mit Coating und Katalysator aus der Automobiltechnik bekannt ist.

4. Gasbrenner nach Anspruch 2 oder 3, dadurch gekennzeichnet, daß die Strukturen hoher Wärmeleitfähigkeit durch in das Keramikmaterial des Festkörpers (10) hineinragende bzw. in diesem eingebettete metallische Stifte (18) und dergleichen gebildet sind.

5. Gasbrenner nach Anspruch 4, dadurch gekennzeichnet, daß die Stifte (18) und der gleichen gemeinsam an einem abgasseitig am Festkörper (10) gehaltenen Träger sitzen.

6. Gasbrenner nach Anspruch 4 oder 5, dadurch gekennzeichnet, daß die Stifte (18) und dergleichen aus zunderfestem, rostfreien Edelstahl bestehen.

7. Gasbrenner nach Anspruch 1, dadurch gekennzeichnet, daß der Festkörper (30) insgesamt aus einem katalytisch unbeschichteten Material (32) hoher Wärmleitfähigkeit besteht.

8. Gasbrenner nach Anspruch 7, dadurch gekennzeichnet, daß der Festkörper (10, 30) Metallstrukturen hat bzw. aus solchen besteht, die mindestens teilweise mit einer Keramikschicht versehen sind.

9. Gasbrenner nach Anspruch 7 oder 8, dadurch gekennzeichnet, daß an der Eingangsseite (12) des Festkörpers (10) eine Keramiklochplatte vorgesehen ist.

10. Gasbrenner nach einem der vorhergehenden Ansprüche, dadurch gekennzeichnet, daß die Verbrennung durch eine λ-Regelung unterstützt ist.

11. Gasbrenner nach einem der vorhergehenden Ansprüche, dadurch gekennzeichnet, daß eine Wärmeauskoppelung auch in einem vorzugsweise an der Gaseintrittsseite (12) des Festkörpers (10) angeordneten, wasserdurchströmten Wärmetauscher erfolgt.
